# FASCICULE DE BREVET EUROPEEN

(11) **EP 2 824 385 B1**
(45) Date de publication et mention de la délivrance du brevet: **22.03.2017**
(21) Numéro de dépôt: 14176311.0
(22) Date de dépôt: 09.07.2014
(51) Int. Cl.: F21S 8/10, F21V 8/00

(54) **Dispositif d'éclairage et/ou de signalisation bi-couleur comprenant un guide de lumière, notamment pour véhicule automobile**
Vorrichtung mit einem Lichtleiter zur zweifarbigen Beleuchtung und/oder Signalisierung, insbesondere für Kraftfahrzeug
Two-colour lighting and/or signalling device comprising a light guide, in particular for a motor vehicle

(30) Priorité: 09.07.2013 FR 1356729
(43) Date de publication de la demande: 14.01.2015
(73) Titulaire: VALEO VISION, 93012 Bobigny Cedex (FR)
(72) Inventeur: Albou, Pierre, 75013 Paris (FR); Puente, Jean-Claude, 93190 Livry Gargan (FR)

(56) Documents cités:
- EP-A2- 2 071 228
- DE-A1- 10 000 992
- DE-A1- 10 143 544
- DE-A1- 19 939 087
- DE-A1-102010 054 929
- US-A1- 2007 058 396

## Description

La présente invention concerne un dispositif d'éclairage et/ou de signalisation bi-couleur, notamment pour véhicule automobile. Elle est en particulier destinée aux feux de position d'éclairage diurne, clignotant ou feux stop. Le document EP 2 071 228 divulgue un tel dispositif d'éclairage et/ou de signalisation.

Dans ce domaine, il est usuel d'utiliser des dispositifs d'éclairage et/ou de signalisation différents pour chaque fonction, juxtaposés les uns à côté des autres.

On sait aussi que les constructeurs souhaitent se singulariser, notamment avec des éléments visuellement originaux, afin d'être identifiables plus facilement par rapport aux concurrents.

Il est ainsi connu de fabriquer des dispositifs d'éclairage et/ou de signalisation uniques, regroupant plusieurs fonctions, en projetant deux types de lumière par un même feu, combinant par exemple le clignotant et le feu de position. Pour cela, les dispositifs utilisent des sources lumineuses de couleurs différentes correspondant à chaque fonction.

Par ailleurs, des technologies plus récentes ont été mises au point, avec des dispositifs munis d'une source lumineuse, en général une diode électroluminescente, et un guide de lumière à travers lequel se propage un faisceau lumineux issu de la source. La lumière se propage dans le guide par réflexion totale jusqu'à une face de sortie, qui projette la lumière de façon à être vu par les véhicules qui suivent ou précèdent.

Dans le domaine automobile, de tels dispositifs sont appréciés car ils permettent de proposer une grande variété de forme et de types de lumière, associant un design original, une compacité remarquable, alliés à une efficacité lumineuse suffisante.

Cependant, lorsqu'on veut fabriquer des dispositifs de ce type avec plusieurs fonctions, on souhaite éviter de multiplier les guides de lumière. En effet, l'utilisation de plusieurs dispositifs juxtaposés engendrent des coûts de production plus importants, ainsi qu'un encombrement plus important et une perte esthétique par rapport à un dispositif unique capable d'exécuter plusieurs fonctions simultanément.

Une solution consiste à utiliser un seul guide de lumière dans lequel se propagent des faisceaux de lumière émis par des sources lumineuses différentes, chacune ayant une couleur spécifique à son utilisation. Ainsi, il suffit d'actionner l'allumage d'une des sources pour que la lumière émise par le guide ait une couleur conforme à sa fonction.

Néanmoins, l'agencement des diodes par rapport au guide est particulièrement sensible, et provoque une perte importante de l'intensité lumineuse si l'un des faisceaux n'est pas orienté correctement à l'entrée du guide. Ainsi, lorsque deux sources sont utilisées, il n'est pas possible de les disposer toutes les deux correctement dans l'axe de la face d'entrée du guide. Soit une seule source est bien centrée et l'autre est excentrée, soit les deux sont mal centrées, et les faisceaux émis ne pénètrent pas correctement à l'intérieur du guide. Par conséquent, les critères de performance exigés ne sont pas atteints en superposant deux sources lumineuses sur la face d'entrée du guide lumineux.

Il existe aussi des diodes électroluminescentes bi-couleurs, mais elles ne sont pas assez puissantes, notamment pour leur utilisation comme clignotant, car l'éclairage en orange est moins performant que l'éclairage blanc.

L'invention vise donc, à obtenir un dispositif muni d'un seul guide de lumière linéaire, capable d'atteindre les critères de luminosité exigés pour remplir deux fonctions différentes, à partir d'au moins deux sources lumineuses disposées à l'entrée du guide.

Pour cela, le dispositif d'éclairage et/ou de signalisation, notamment pour véhicule automobile, comprend une première et une seconde sources lumineuses, aptes à émettre respectivement un premier et un deuxième faisceaux lumineux, et un guide de lumière, apte à guider lesdits faisceaux lumineux. Ledit guide présente une portion d'entrée pour conduire ledit second faisceau, et une portion de propagation pour conduire l'ensemble desdits faisceaux vers une face de sortie commune. Ladite face de sortie commune est une face ou une partie d'une face de la portion de propagation. Ladite portion d'entrée comprend une première face pour réfléchir des rayons du second faisceau, ladite première face étant en outre configurée pour réfracter ledit premier faisceau lumineux dans le guide de lumière.

Selon l'invention, le guide de lumière est en forme de cordon et dans lequel ladite portion d'entrée dudit guide de lumière comprend une deuxième face parallèle à ladite première face de réflexion, lesdites première et deuxième faces formant ensemble une paire, ladite deuxième face étant configurée pour réfléchir lesdits rayons du second faisceau émis par la seconde source lumineuse vers ladite première face.

On dispose ainsi d'un dispositif capable de remplir deux fonctions en émettant un faisceau lumineux dans deux couleurs différentes, à partir de deux sources de lumière. Il permet notamment aux deux faisceaux d'être guidés de façon sensiblement complète dans la portion principale d'un même guide de lumière linéaire grâce à la configuration de sa portion d'entrée. Il évite ainsi une superposition complexe de plusieurs guides séparés sur le véhicule concerné et permet de gagner de la place et de faire des économies sur le matériau utilisé pour fabriquer les guides.

D'autre part, il ouvre de nouvelles possibilités concernant l'aspect esthétique, notamment pour les concepteurs et designers automobiles, grâce à une technologie innovante, celle des guides de lumière.

Il permet en outre de remplir les critères de performances, en terme de luminosité, demandés pour chacune des fonctions, quelle que soit la couleur requise. Ce dispositif apporte de la sorte, une solution compacte alliant l'aspect esthétique à l'efficacité lumineuse afin de répondre aux normes de luminosité en vigueur.

Selon différents modes de réalisation de l'invention, qui pourront être pris ensemble ou séparément :
- ladite première face est située dans le prolongement de ladite portion de propagation,
- ladite première face est disposée selon un angle d'environ 45° par rapport à une direction d'incidence du second faisceau lumineux,
- le deuxième faisceau est réfléchi par ladite première face, de sorte qu'il soit sensiblement parallèle à l'axe de la portion de propagation du guide de lumière lorsqu'il y pénètre,
- ladite première face forme un dièdre avec un plan médian de la portion de propagation ;
- ledit dièdre présente un angle d'environ 45° ;
- ledit dispositif comprend une première source unique et/ou plusieurs secondes sources lumineuses et ladite portion d'entrée comprend une dite seconde face d'entrée pour chaque seconde source,
- ladite portion d'entrée comprend une dite paire de faces de réflexion pour chaque seconde source,
- ladite portion d'entrée comprend un évidement de forme concave vers l'intérieur de ladite portion de propagation dudit guide,
- les deuxièmes faces de chaque paire, qui sont les plus éloignées du centre de l'entrée du guide, forment un contour extérieur de ladite portion d'entrée, et les premières faces de chaque paire forment un contour dudit évidement,
- ladite première source lumineuse est centrée sur ledit évidement,
- la section de la portion principale est supérieure ou égale à la somme des sections formées par chaque paire,
- ladite première source lumineuse est apte à émettre une lumière blanche,
- ladite première source lumineuse est d'intensité lumineuse plus forte que celle de la dite seconde source,
- ladite seconde source lumineuse est apte à émettre une lumière colorée.

L'invention concerne également un boîtier optique comprenant un dispositif d'éclairage et/ou de signalisation tel que décrit précédemment.

L'invention sera mieux comprise à la lumière de la description suivante qui n'est donnée qu'à titre indicatif et qui n'a pas pour but de la limiter, accompagnée des dessins joints :
- la figure 1 illustrant de façon schématique, une vue en perspective d'un dispositif d'éclairage et/ou de signalisation selon l'invention,
- la figure 2 illustrant de façon schématique, une vue de coupe longitudinale d'un dispositif d'éclairage ou de signalisation selon l'invention, représenté avec le trajet des rayons lumineux.

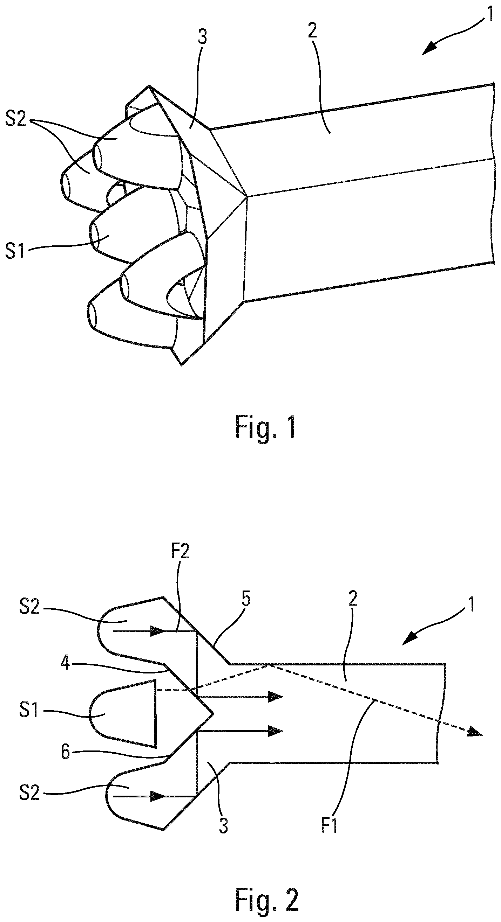

Comme illustré aux figures 1 et 2, l'invention concerne un dispositif d'éclairage et/ou de signalisation 1 comprenant un guide de lumière, ainsi qu'une première S1 et une seconde S2 sources lumineuses aptes à émettre respectivement un premier F1 et un second F2 faisceaux lumineux. Ici, lesdites sources lumineuses S1, S2 sont des diodes électroluminescentes, non-représentées, disposées sur un support de type PCB, en particulier un support de type substrat métallique isolé, également non-représenté. Les sources lumineuses S1, S2 pourront avantageusement être munies de moyens de collimation des faisceaux lumineux F1, F2, par exemple dioptriques, pour assurer des faisceaux de rayons parallèles et concentrer lesdits faisceaux lumineux F1, F2 dans une direction à l'intérieur de la portion d'entrée. Les moyens de collimation dioptriques sont ici des éléments du guide de lumière qui permettent de concentrer les faisceaux lumineux F1, F2 issus de la source par réflexion totale. Les moyens de collimation sont moulés en même temps que le guide de lumière.

Selon une variante, non-illustrée, les moyens de collimation pourront comprendre un réflecteur, indépendant du guide. Ce dernier présentera alors une face d'entrée du second faisceau F2, par exemple sensiblement orthogonale à la direction incidente dudit second faisceau F2.

Ledit guide de lumière est linéaire, en forme de cordon. Il est apte à guider lesdits faisceaux lumineux F1, F2. Ledit guide présente une portion d'entrée 3 pour conduire ledit second faisceau F2, ainsi qu'une portion de propagation 2 pour conduire l'ensemble desdits faisceaux F1, F2 vers une face de sortie commune, non représentée sur les figures. Ladite face de sortie commune est une face ou une partie d'une face de la portion de propagation. Le guide de lumière peut notamment être muni de prismes sur une face de réflexion, qui renvoie les faisceaux lumineux F1, F2 vers ladite face de sortie.

Les deux sources lumineuses S1, S2 étant disposées l'une à côté de l'autre, la deuxième source lumineuse S2 n'émet pas le deuxième faisceau lumineux F2 directement dans la portion de propagation 2, contrairement à la première source S1. Le guide de lumière ayant une forme de cordon linéaire, seule une source S1 peut être correctement centrée de façon à émettre le faisceau dans le guide, car le cordon ne présente pas une section suffisamment large pour accueillir deux sources lumineuses S1, S2 sur une face d'entrée unique.

Autrement dit, la position de la deuxième source S2 implique que le second faisceau lumineux F2 soit au moins en partie décalé par rapport à la portion de propagation 2 du guide de lumière. Sans l'invention, au moins une partie dudit second faisceau lumineux F2 ne pourrait pas pénétrer dans ladite portion de propagation 2, ce qui engendrerait au minimum une perte de luminosité importante, voire l'impossibilité d'entrer dans le guide de lumière.

Pour y remédier, ladite portion d'entrée 3 du dispositif selon l'invention, est géométriquement configurée pour rediriger ledit second faisceau lumineux F2 dans la portion de propagation 2 du guide de lumière.

A cette fin, ladite portion d'entrée 3 dudit guide de lumière comprend une première face 4 pour réfléchir des rayons du second faisceau F2. Ladite première face 4 est en outre configurée pour réfracter ledit premier faisceau lumineux F1 dans ledit guide de lumière. Sur la figure 2, le faisceau F1 est réfracté par la première face 4 dans la portion de propagation 2, puis est réfléchi sur les faces de ladite portion de propagation 2.

Ladite première face de réflexion 4 définit au moins en partie une face d'entrée du premier faisceau lumineux F1.

Grâce à la configuration de la portion d'entrée 3, deux faisceaux F1, F2 différents peuvent être guidés par un guide de lumière linéaire unique. Le dispositif 1 peut ainsi remplir deux fonctions différentes avec un seul dispositif 1, comme par exemple un feu de position et un clignotant.

Ladite première face 4 est disposée par exemple selon un angle de 45° par rapport à une direction d'incidence dudit deuxième faisceau lumineux F2, de façon à réfléchir ledit second faisceau lumineux F2 perpendiculairement à sa direction d'incidence. Le second faisceau lumineux F2 est réfléchi par la première face 4, vers la portion de propagation 2 du guide de lumière, de sorte qu'il soit sensiblement parallèle à l'axe de la portion de propagation 2.

Ladite première face 4 est située dans le prolongement de ladite portion de propagation 2, c'est-à-dire que le premier faisceau lumineux F1 est orienté de façon à entrer dans ladite portion de propagation 2, une fois la première face 4 passée. Autrement dit, la portion d'entrée 3 ne comprend pas de disposition particulière, en dehors de la première face 4, pour guider ledit premier faisceau lumineux F1 vers la portion de propagation 2. Ladite portion d'entrée 3 n'a donc pas d'effet spécifique sur l'orientation dudit premier faisceau F1, à l'exception de l'effet de réfraction de la première face 4, pour le guider vers la portion de propagation 2.

La portion d'entrée 3 comprend aussi une deuxième face 5 parallèle à ladite première face 4, lesdites première et deuxième faces 4, 5 formant ensemble une paire. Ladite deuxième face 5 est disposée selon un angle de 45° par rapport à la direction d'émission du second faisceau F2. Ladite deuxième face 5 réfléchit perpendiculairement ledit second faisceau F2 vers ladite première face 4.

Ainsi, le second faisceau F2 subit deux réflexions consécutives, qui décalent le second faisceau lumineux F2 à l'intérieur de la portion de propagation 2 et lui permettent d'y entrer entièrement, tout en ayant une direction parallèle à l'axe de cette portion. La première réflexion due à la deuxième face 5, le guide perpendiculairement à sa direction d'émission ainsi qu'à un axe longitudinal de la portion de propagation 2. Puis la seconde réflexion due à la première face 4, le réoriente dans la portion de propagation 2 dans une direction parallèle à cet axe.

On constate à cette occasion que les faisceaux F1 et F2 ont avantageusement une direction initiale sensiblement parallèle.

Ledit second faisceau lumineux F2 a avantageusement une couleur différente de celle du premier faisceau lumineux F1. Par exemple, ladite première source lumineuse S1 émet une lumière blanche et ladite seconde source lumineuse S2 émet une lumière colorée.

Ledit dispositif 1 pourra comprendre en outre plusieurs secondes sources lumineuses S2 disposées autour d'une première source lumineuse S1 unique. Ainsi, pour obtenir une couleur spécifique, on utilise les sources S1, S2 de couleurs différentes.

Il est possible d'utiliser plusieurs sources lumineuses S2 de même couleur, car certaines sources ont une intensité trop faible pour répondre aux critères de luminosité, lorsqu'elles sont utilisées seules. En effet, actuellement les diodes blanches sont plus puissantes que les diodes de couleur. Dans ce cas, la lumière blanche est d'intensité lumineuse plus forte que celle de ladite seconde source, si elle a une autre couleur.

D'autre part, certaines fonctions requièrent des intensités plus fortes que celles fournies par les LED de couleur, comme les clignotants par exemple pour la couleur ambrée. Il devient donc nécessaire de recourir à plusieurs sources de même couleur pour atteindre les niveaux exigés.

Afin d'orienter tous les faisceaux lumineux F1, F2 dans la portion de propagation 2 du guide de lumière, ladite portion d'entrée 3 comprend ici une dite paire de faces de réflexion 4, 5 pour chaque seconde source lumineuse S2.

Chaque paire est disposée selon un angle de 45° par rapport à la direction du faisceau lumineux F2 issu de la seconde source lumineuse S2 décalée, chaque source lumineuse S2 étant apte à émettre ledit faisceau lumineux F2 entre les deux faces de réflexion 4, 5 d'une même paire.

Toutes les paires sont reliées entre elles et forment ensemble ladite portion d'entrée 3. Leur disposition constitue un évidement de forme concave vers l'intérieur de ladite portion de propagation 2. Ainsi, lesdites deuxièmes faces de réflexion 5 de chaque paire, qui sont les plus éloignées du centre de l'entrée du guide, forment un contour extérieur de ladite portion d'entrée 3, et lesdites premières faces de réflexion 4 de chaque paire forment un contour intérieur dudit évidement.

De plus, la section de la portion principale est avantageusement supérieure ou égale à la somme des sections formées par chaque paire, afin de minimiser les pertes lumineuses.

Ladite première source lumineuse S1 est centrée sur ledit évidement, qui est lui-même dans le prolongement de la portion de propagation 2 dudit guide de lumière. Ainsi, les premières faces 4 dudit évidement forment les faces d'entrée du premier faisceau lumineux F1, et ledit premier faisceau lumineux F1 est sensiblement centré autour de l'axe de la portion d'entrée 3.

En outre, les secondes sources lumineuses S2 sont disposées contre le guide de lumière. En revanche, la première source lumineuse S1 est à distance de l'entrée dudit guide de lumière, car l'évidement est concave.

De tels dispositifs 1 sont particulièrement intéressants car ils peuvent être agencés de multiples manières, dans un minimum de place. Il est ainsi possible de donner aux guides des formes originales.

## Revendications

1. Dispositif d'éclairage et/ou de signalisation (1), notamment pour véhicule automobile, comprenant une première (S1) et une seconde (S2) sources lumineuses, aptes à émettre respectivement un premier (F1) et un deuxième (F2) faisceaux lumineux, et un guide de lumière, apte à guider lesdits faisceaux lumineux (F1, F2), ledit guide présentant une portion d'entrée (3) pour conduire ledit second faisceau (F2) et une portion de propagation (2) pour conduire l'ensemble desdits faisceaux (F1, F2) vers une face de sortie commune, ladite portion d'entrée (3) comprenant une première face (4) pour réfléchir des rayons du second faisceau (F2), ladite première face (4) étant en outre configurée pour réfracter ledit premier faisceau lumineux (F1) dans le guide de lumière,
**caractérisé en ce que** le guide de lumière est en forme de cordon et dans lequel ladite portion d'entrée (3) dudit guide de lumière comprend une deuxième face (5) parallèle à ladite première face de réflexion (4), lesdites première (4) et deuxième (5) faces formant ensemble une paire, ladite deuxième face (5) étant configurée pour réfléchir lesdits rayons du second faisceau (F2) émis par la seconde source lumineuse (S2) vers ladite première face (4).

2. Dispositif d'éclairage et/ou de signalisation selon la revendication 1, dans laquelle ladite première face (4) est située dans le prolongement de ladite portion de propagation (2).

3. Dispositif d'éclairage et/ou de signalisation selon l'une quelconque des revendications précédentes, dans lequel ladite première face (4) est disposée selon un angle de 45° par rapport à une direction d'incidence du second faisceau lumineux (F1).

4. Dispositif d'éclairage et/ou de signalisation selon l'une quelconque des revendications précédentes, dans lequel le deuxième faisceau (F2) est réfléchi par ladite première face, de sorte qu'il soit sensiblement parallèle à l'axe de la portion de propagation (2) du guide de lumière lorsqu'il y pénètre.

5. Dispositif d'éclairage et/ou de signalisation (1) selon l'une quelconque des revendications précédentes, comprenant une première source (S1) unique et/ou plusieurs secondes sources lumineuses (S2) et ladite portion d'entrée (3) comprend une dite première face (4) pour chaque seconde source (S2).

6. Dispositif d'éclairage et/ou de signalisation selon les revendications 4 et 5, dans lequel ladite portion d'entrée (3) comprend une dite paire de faces (4, 5) pour chaque seconde source (S2).

7. Dispositif d'éclairage et/ou de signalisation selon la revendication 6, dans lequel ladite portion d'entrée (3) comprend un évidement de forme concave vers l'intérieur de ladite portion de propagation (2) dudit guide.

8. Dispositif d'éclairage et/ou de signalisation selon la revendication 7, dans lequel les deuxièmes faces (5) de chaque paire, qui sont les plus éloignées du centre de l'entrée du guide, forment un contour extérieur de ladite portion d'entrée (3), et les premières faces (4) de chaque paire forment un contour dudit évidement.

9. Dispositif d'éclairage et/ou de signalisation selon la revendication 7 ou 8, dans lequel ladite première source lumineuse (S1) est centrée sur ledit évidement.

10. Dispositif d'éclairage et/ou de signalisation selon l'une quelconque des revendications 6 à 9, dans lequel la section de la portion principale (2) est supérieure ou égale à la somme des sections formées par chaque paire.

11. Dispositif d'éclairage et/ou de signalisation selon l'une quelconque des revendications précédentes, dans lequel ladite première source lumineuse (S1) est apte à émettre une lumière blanche.

12. Dispositif d'éclairage et/ou de signalisation selon l'une quelconque des revendications précédentes, dans lequel ladite première source lumineuse (S1) est d'intensité lumineuse plus forte que celle de ladite seconde source (S2).

13. Dispositif d'éclairage et/ou de signalisation selon l'une quelconque des revendications précédentes, dans lequel ladite seconde source lumineuse (S2) est apte à émettre une lumière colorée.

14. Boîtier optique comprenant un dispositif d'éclairage et/ou de signalisation selon l'une quelconque des revendications précédentes.

## Patentansprüche

1. Beleuchtungs- und/oder Signalgebungsvorrichtung (1), insbesondere für Kraftfahrzeuge, mit einer ersten (S1) und einer zweiten (S2) Lichtquelle, die ein erstes (F1) bzw. ein zweites (F2) Lichtbündel zu emittieren vermögen, und einem Lichtleiter, der die Lichtbündel (F1, F2) zu leiten vermag, wobei der Lichtleiter einen Eintrittsabschnitt (3) zum Führen des zweiten Lichtbündels (F2) und einen Ausbreitungsabschnitt (2) zum Führen der Gesamtheit der Lichtbündel (F1, F2) zu einer gemeinsamen Austrittsfläche aufweist, wobei der Eintrittsabschnitt (3) eine erste Fläche (4) zum Reflektieren der Strahlen des zweiten Lichtbündels (F2) aufweist, wobei die erste Fläche (4) ferner dazu ausgebildet ist, das erste Lichtbündel (F1) im Lichtleiter zu brechen,
**dadurch gekennzeichnet, dass** der Lichtleiter schnurförmig ist und wobei der Eintrittsabschnitt (3) des Lichtleiters eine zweite, zur ersten Reflexionsfläche (4) parallele Fläche (5) aufweist, wobei die erste (4) und die zweite (5) Fläche zusammen ein Paar bilden, wobei die zweite Fläche (5) dazu ausgebildet ist, die Strahlen des von der zweiten Lichtquelle (S2) emittierten zweiten Lichtbündels (F2) zur ersten Fläche (4) zu reflektieren.

2. Beleuchtungs- und/oder Signalgebungsvorrichtung nach Anspruch 1,
bei der die erste Fläche (4) in der Verlängerung des Ausbreitungsabschnitts (2) angeordnet ist.

3. Beleuchtungs- und/oder Signalgebungsvorrichtung nach einem der vorhergehenden Ansprüche,
bei der die erste Fläche (4) bezüglich einer Einfallsrichtung des zweiten Lichtbündels (F1) unter einem Winkel von 45° angeordnet ist.

4. Beleuchtungs- und/oder Signalgebungsvorrichtung nach einem der vorhergehenden Ansprüche,
bei der das zweite Lichtbündel (F2) von der ersten Fläche solchermaßen reflektiert wird, dass es zur Achse des Ausbreitungsabschnitts (2) des Lichtleiters beim Eintritt in selbigen im Wesentlichen parallel ist.

5. Beleuchtungs- und/oder Signalgebungsvorrichtung (1) nach einem der vorhergehenden Ansprüche,
mit einer einzigen ersten Lichtquelle (S1) und/oder mehreren zweiten Lichtquellen (S2), wobei der Eintrittsabschnitt (3) für jede zweite Lichtquelle (S2) eine erste Fläche (4) aufweist.

6. Beleuchtungs- und/oder Signalgebungsvorrichtung nach den Ansprüchen 4 und 5,
bei der der Eintrittsabschnitt (3) für jede zweite Lichtquelle (S2) ein Flächenpaar (4, 5) aufweist.

7. Beleuchtungs- und/oder Signalgebungsvorrichtung nach Anspruch 6,
bei der der Eintrittsabschnitt (3) eine konkave Aussparung nach innen in den Ausbreitungsabschnitt (2) des Lichtleiters aufweist.

8. Beleuchtungs- und/oder Signalgebungsvorrichtung nach Anspruch 7,
bei der die zweiten Flächen (5) jedes Paares, die von der Mitte des Lichtleitereintritts am weitesten entfernt sind, einen Außenumfang des Eintrittsabschnitts (3) bilden und die ersten Flächen (4) jedes Paares einen Umfang der Aussparung bilden.

9. Beleuchtungs- und/oder Signalgebungsvorrichtung nach Anspruch 7 oder 8, bei der die erste Lichtquelle (S1) auf die Aussparung zentriert ist.

10. Beleuchtungs- und/oder Signalgebungsvorrichtung nach einem der Ansprüche 6 bis 9,
bei der der Querschnitt des Hauptabschnitts (2) größer oder gleich der Summe der von jedem Paar gebildeten Querschnitte ist.

11. Beleuchtungs- und/oder Signalgebungsvorrichtung nach einem der vorhergehenden Ansprüche,
bei der die erste Lichtquelle (S1) ein weißes Licht zu emittieren vermag.

12. Beleuchtungs- und/oder Signalgebungsvorrichtung nach einem der vorhergehenden Ansprüche,
bei der die erste Lichtquelle (S1) eine höhere Lichtstärke hat als die zweite Lichtquelle (S2).

13. Beleuchtungs- und/oder Signalgebungsvorrichtung nach einem der vorhergehenden Ansprüche,
bei der die zweite Lichtquelle (S2) ein farbiges Licht zu emittieren vermag.

14. Optisches Gehäuse mit einer Beleuchtungs- und/oder Signalgebungsvorrichtung nach einem der vorhergehenden Ansprüche.

## Claims

1. Lighting and/or signalling device (1), in particular for a motor vehicle, comprising first (S1) and second (S2) light sources, able to emit respectively a first (F1) and a second (F2) light beam, and a light guide able to guide said light beams (F1, F2), said guide having an entry portion (3) for conducting said second beam (F2) and a propagation portion for conducting both of said beams (F1, F2) to a common exit face, said entry portion (3) comprising a first face (4) for reflecting rays of the second beam (F2), said first face (4) also being configured to refract said first light beam (F1) in the light guide,
**characterised in that** the light guide is in the form of a cord and in which said entry portion (3) of said light guide comprises a second face (5) parallel to said first reflection face (4), said first (4) and second (5) faces forming together a pair, said second face (5) being configured so as to reflect said rays of the second beam (F2) emitted by the second light source (S2) towards said first face (4).

2. Lighting and/or signalling device according to claim 1, in which said first face (4) is situated in line with said propagation portion (2).

3. Lighting and/or signalling device according to either of the preceding claims, in which said first face (4) is disposed at an angle of 45° with respect to a direction of incidence of the second light beam (F1).

4. Lighting and/or signalling device according to any of the preceding claims, in which the second beam (F2) is reflected by said first face so that it is substantially parallel to the axis of the propagation portion (2) of the light guide when it enters therein.

5. Lighting and/or signalling device (1) according to any of the preceding claims, comprising a single first source (S1) and/or a plurality of second light sources (S2) and said entry portion (3) comprises a said first face (4) for each second source (S2).

6. Lighting and/or signalling device according to claims 4 and 5, in which said entry portion (3) comprises a said pair of faces (4, 5) for each second source (S2).

7. Lighting and/or signalling device according to claim 6, in which said entry portion (3) comprises a recess concave in shape towards the inside of said propagation portion (2) of said guide.

8. Lighting and/or signalling device according to claim 7, in which the second faces (5) of each pair that are the furthest away from the centre of the entrance of said guide form an external contour of said entry portion (3), and the first faces (4) of each pair form a contour of said recess.

9. Lighting and/or signalling device according to claim 7 or claim 8, in which said first light source (S1) is centred on said recess.

10. Lighting and/or signalling device according to any of claims 6 to 9, in which the cross section of the main portion (2) is greater than or equal to the sum of the cross sections formed by each pair.

11. Lighting and/or signalling device according to any of the preceding claims, in which said first light source (S1) is able to emit a white light.

12. Lighting and/or signalling device according to any of the preceding claims, in which said first light source (S1) has a greater light intensity than that of said second source (S2).

13. Lighting and/or signalling device according to any of the preceding claims, in which said second light source (S2) is able to emit a coloured light.

14. Optical housing comprising a lighting and/or signalling device according to any of the preceding claims.
